# EUROPEAN PATENT APPLICATION

(11) **EP 4 079 585 A1**
(43) Date of publication of application: **26.10.2022**
(21) Application number: 22168360.0
(22) Date of filing: 14.04.2022
(51) Int. Cl.: B60S 1/38

(54) **WINDSHIELD WIPER STRUCTURE WITH MULTIPLE BEND SECTIONS**

(30) Priority: 20.04.2021 CN 202110424649
(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW)
(74) Representative: 2K Patentanwälte Blasberg Kewitz & Reichel

(57) **Abstract**

A windshield wiper structure (1) includes a fixing frame (10), a support plate (20) and a blade (30). The fixing frame (10) includes a fixing seat (11) and a pivot (12) disposed on the fixing seat (11). The support plate (20) is combined on a bottom side of the fixing seat (11) and includes multiple bend sections (211) connected with each other and extended oppositely from the fixing seat (11). Each bend section (211) has a bending length (L). A bending angle (A) is defined between adjacent two of the bend sections (211). The blade (30) is combined on a bottom surface of the support plate (20). Therefore, the blade (30) may be uniformly pressed to flatly contact with a glass surface to remove rain or debris on the glass surface.

## Description

### BACKGROUND

### Technical Field

The disclosure relates to a windshield wiper, particularly to a windshield wiper which uniformly exerts a force on a windshield.

### Related Art

A windshield wiper, which is connected to a drive arm of a vehicle and disposed on the outside of a windshield, is a device used to remove rain or debris from the windshield by the drive arm driving a wiper blade to swing on the windshield.

A wiper is used to remove rain, fog or debris on the windshield to maintain a good vision and enhance driving safety for a driver. Thus, the windshield wiper needs to closely and evenly press a vehicle's glass surface to form a close connection between a blade and a windshield to reliably remove rain or debris on the glass. Therefore, how to keep a close connection between the blade and the windshield to reliably remove rain is a motivation of the inventor.

### SUMMARY

An object of the disclosure is to provide a windshield wiper structure with multiple bend sections. The blade may be evenly pressed to flatly contact with a glass surface to remove rain or debris from the glass surface.

To accomplish the above object, the disclosure provides a windshield wiper structure with multiple bend sections, which includes a fixing frame, a support plate and a blade. The fixing frame includes a fixing seat and a pivot disposed on the fixing seat. The support plate is combined on a bottom side of the fixing seat and includes multiple bend sections connected with each other and extended oppositely from the fixing seat. Each bend section has a bending length. A bending angle is defined between adjacent two of the bend sections. The blade is combined on a bottom surface of the support plate.

A related-art support plate is of an arcuate shape. Because the arcuate support plate generates rebounding stress, the rebounded support plate cannot be completely attached to a glass surface due to insufficient curvature, and thus the defect rate of the products is increased. The support plate of the wiper structure of the disclosure includes multiple bend sections connected with each other. Each bend section has a bending length. A bending angle is defined between adjacent two of the bend sections. The bend sections are different in length. The bending angles are different from each other. As a result, the support plate of the disclosure may not generate rebounding stress so as to evenly exert force and attach on a glass surface. In addition, the bending lengths (the number of bend points) and the bending angles may be adjusted according to practical requirements to uniformize the pressing force of the support plate. As a result, the blade may be uniformly pressed to flatly contact with a glass surface to remove rain or debris from the glass surface.

In view of this, the inventors have devoted themselves to the above-mentioned related art, researched intensively and cooperated with the application of science to try to solve the above-mentioned problems. Finally, the invention which is reasonable and effective to overcome the above drawbacks is provided.

### BRIEF DESCRIPTION OF THE DRAWINGS

FIG. 1 is a perspective schematic view of the windshield wiper structure with multiple bend sections;
FIGS. 2 and 3 are two exploded views of the windshield wiper structure with multiple bend sections;
FIG. 4 is a perspective view of the elastic sheet;
FIG. 5 is a side view of the elastic sheet; and
FIG. 6 is a side view of another embodiment of the elastic sheet.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

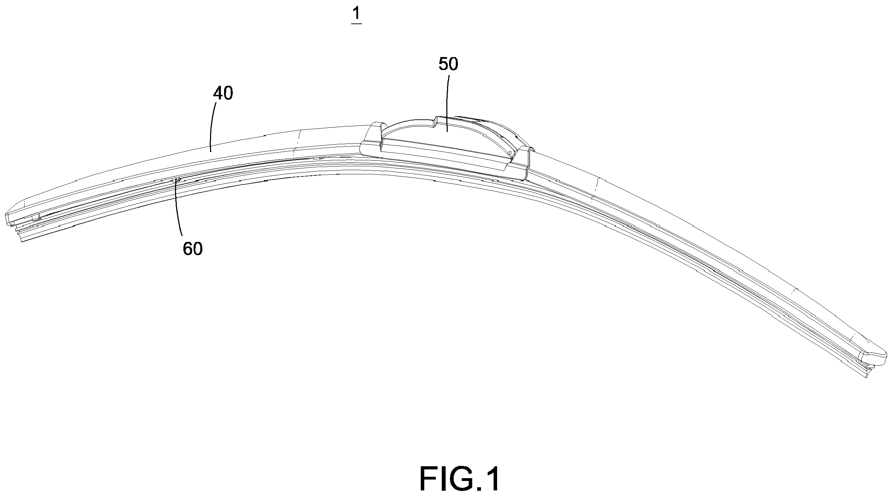

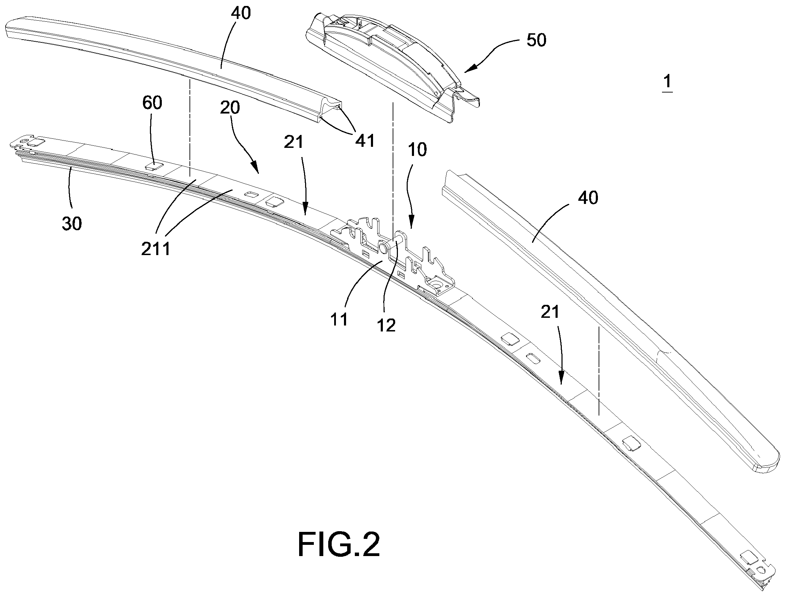

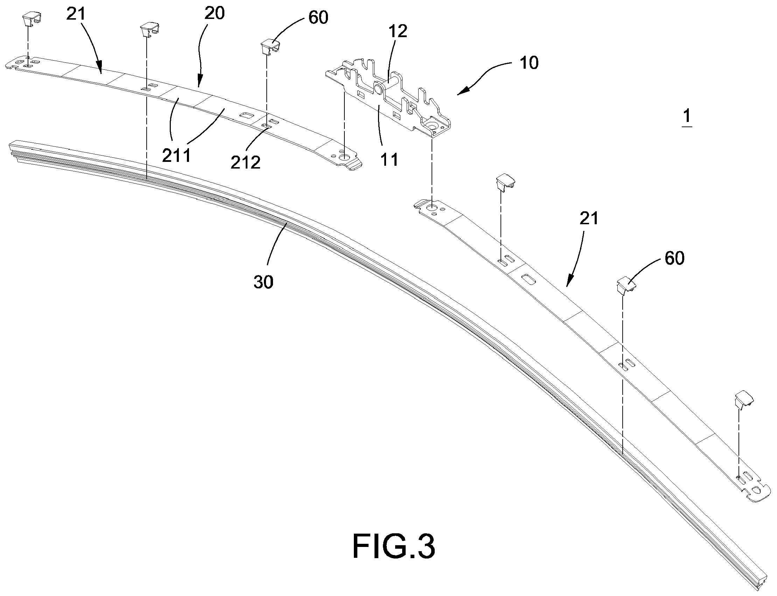

Please refer to FIGS. 1-3, which are a perspective schematic view and two exploded views of the windshield wiper structure with multiple bend sections of the disclosure. The windshield wiper structure 1 with multiple bend sections of the disclosure includes a fixing frame 10, a support plate 20 and a blade 30. The fixing frame 20 is combined on a bottom side of the fixing frame 10. The blade 30 is combined on the bottom surface of the support plate 20. Thus, the windshield wiper structure 1 is composed of the aforementioned components.

The fixing frame 10 includes a fixing seat 11 and a pivot 12 disposed on the fixing seat 11. The pivot 12 is used to combine a drive arm (not shown in figures) to drive the windshield wiper structure 1 to remove rain or debris on a glass surface.

In this embodiment, the support plate 20 is made of metal to possess flexibility and is combined on a bottom side of the fixing seat 11. The support plate 20 includes multiple bend sections 211 connected with each other and extended oppositely from the fixing seat 11. In other words, the support plate 20 is extended from two sides of the fixing seat 11, and the two sides are opposite to each other. In this embodiment, the support plate 20 includes a pair of elastic sheets 21 extended oppositely from the fixing seat 11. Each elastic sheet 21 includes multiple bend sections 211 connected to each other.

The blade 30 is made of rubber and is combined on the bottom surface of the support plate 20. The blade 30 is pressed by the support plate 20 to attach to a glass surface.

In one embodiment of the disclosure, the windshield wiper structure 1 further includes a pair of covers 40, an accessory seat 50 and multiple engaging frames 60. The pair of covers 40 correspondingly covers the pair of elastic sheets 21. Each cover 40 has a pair of troughs 41. Two sides of each elastic sheet 21 separately pass the pair of troughs 41 for the pair of covers 40 to be combined on the support plate 20. The accessory seat 50 is combined on the fixing base 11 and sandwiched between the pair of covers 40.

In this embodiment, each of the engaging frames 60 is a U-shaped fastener. Each elastic sheet 21 is provided with multiple insert slots 212 spacedly. The engaging frames 60 separately pass through the insert slots 212 to combine the blade 30. As a result, the top of the blade 30 is fastened to the engaging frames 60. The blade 30 is combined on the bottom surface of the support plate 20 through the engaging frames 60.

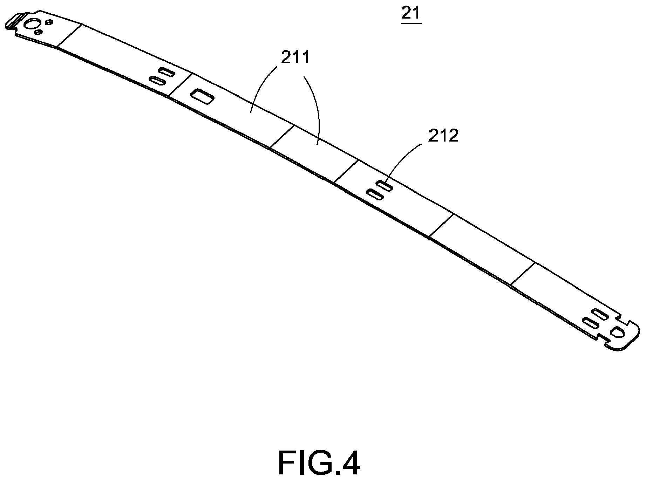

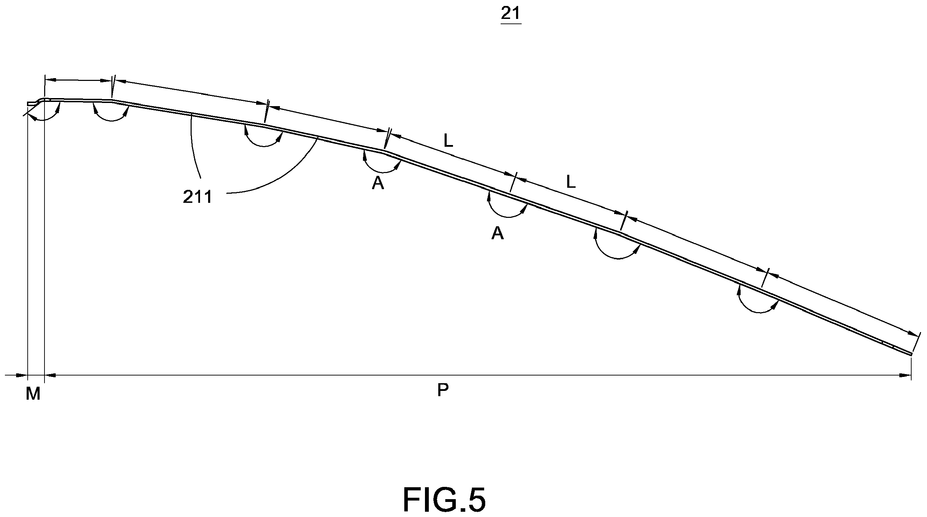

Please refer to FIGS. 4 and 5, which are a schematic view and a cross-sectional view of the pressing sheet of the disclosure. The support plate 20 of the windshield wiper structure 1 of the disclosure is composed of a pair of elastic sheets 21. In one embodiment of the disclosure, each elastic sheet 21 includes six bend points and seven bend sections 211. The bend sections 211 are connected with each other.

In detail, each bend section 211 has a bending length L. A bending angle A is defined (formed) between adjacent two of the bend sections 211. In this embodiment, each bending length L is different in length. A span length of each bending length L is between about 20 mm and about 65 mm. Also, all the bending angles A are different from each other. Each bending angle A is between about 140 degrees and about 177 degrees.

In this embodiment, the elastic sheet 21 includes an active section P and an end plug section M. The active section P is used to press the blade 30 to remove rain on the glass surface. The active section P includes at least two bend sections 211. The end plug section M is used to combine an end plug (not shown in figures) to protect an edge of the elastic sheet 21 and extend service life.

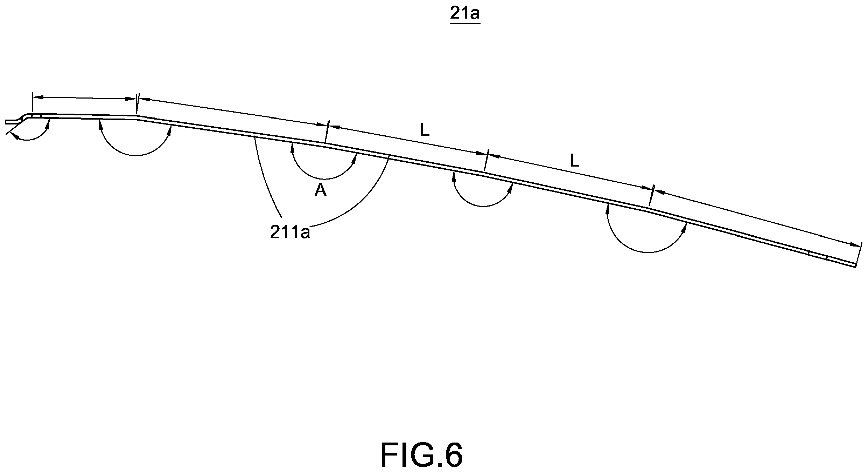

Please refer to FIG. 6, which is a side view of another embodiment of the elastic sheet of the disclosure. The elastic sheet 21a in this embodiment is similar to the above embodiment. The elastic sheet 21a includes four bend points and five bend sections 211a. The bend sections 211a are connected with each other. In addition, each bend section 211a has a bending length L. A bending angle A is defined between adjacent two of the bend sections 211a. In this embodiment, each bending length L is different in length, and all the bending angles A are different from each other.

In practice, each bending length L (the number of bend points) and each bending angle A may be adjusted depending on practical requirements such as the Young's modulus of the support plate 20 so as to reinforce and uniformize the pressing force of the support plate 20 to make the support plate 20 more evenly press the blade 30. Accordingly, the blade 30 may uniformly press the glass surface to attach to the glass surface to be advantageous to remove rain or debris on the glass surface.

## Claims

1. A windshield wiper structure (1) with multiple bend sections, the windshield wiper structure (1) comprising:
a fixing frame (10), comprising a fixing seat (11) and a pivot (12) disposed on the fixing seat (11);
a support plate (20), combined on a bottom side of the fixing seat (11), comprising multiple bend sections (211) connected with each other and extended oppositely from the fixing seat (11), each bend section (211) comprising a bending length (L), and a bending angle (A) being defined between adjacent two of the bend sections (211); and
a blade (30), combined on a bottom surface of the support plate (20).

2. The windshield wiper structure (1) of claim 1, wherein the support plate (20) comprises a pair of elastic sheets (21) extended oppositely from the fixing seat (11), and each elastic sheet (21) comprises multiple bend sections (211) connected with each other.

3. The windshield wiper structure (1) of claim 2, further comprising: a pair of covers (40), correspondingly covering the pair of elastic sheets (21).

4. The windshield wiper structure (1) of claim 3, wherein each cover (40) comprises a pair of troughs (41), and two sides of each elastic sheet (21) respectively pass the pair of troughs (41).

5. The windshield wiper structure (1) of claim 3, further comprising: an accessory seat (50), combined on the fixing base (11) and sandwiched between the pair of covers (40).

6. The windshield wiper structure (1) of claim 2, further comprising: multiple engaging frames (60), wherein the blade (30) is combined on the bottom surface of the support plate (20) through the engaging frames (60), each elastic sheet (21) comprises multiple insert slots (212) disposed spacedly, and the engaging frames (60) respectively pass through the insert slots (212) to combine the blade (30).

7. The windshield wiper structure (1) of claim 2, wherein the elastic sheet (21) comprises an active section (P) pressing the blade (30) and an end plug section (M), and the active section (P) comprises at least two bend sections (211).

8. The windshield wiper structure (1) of claim 2, wherein each elastic sheet (21) comprises six bend points and seven bend sections (211) connected with each other.

9. The windshield wiper structure (1) of claim 2, wherein each elastic sheet (21) comprises four bend points and five bend sections (211) connected with each other.

10. The windshield wiper structure (1) of claim 1, wherein the bending lengths (L) are different in length, a span length of each bending length (L) is between about 20 mm and about 65 mm, the bending angles (A) are different from each other, and each bending angle (A) is between about 140 degrees and about 177 degrees.
